# FASCICULE DE BREVET EUROPEEN

(11) **EP 0 596 762 B1**
(45) Date de publication et mention de la délivrance du brevet: **31.01.1996**
(21) Numéro de dépôt: 93402453.0
(22) Date de dépôt: 06.10.1993
(51) Int. Cl.: B60R 25/02

(54) **Dispositif antivol de direction pour véhicule automobile, et clé pour un tel dispositif**
Lenkdiebstahl-Schutzvorrichtung für Kraftfahrzeuge und Schlüssel für derartige Vorrichtung
Theft preventing device on the steering mechanism for vehicle and key for such device

(30) Priorité: 03.11.1992 FR 9213149
(43) Date de publication de la demande: 11.05.1994
(73) Titulaire: YMOS FRANCE, F-80970 Sailly-Flibeaucourt (FR)
(72) Inventeur: Lasson, Olivier, F-80100 Abbeville (FR); Israel, Pascal, F-80100 Abbeville (FR); Girard, Joel, F-80100 Abbeville (FR); Muller, Pierre-Emmanuel, F-75015 Paris (FR)
(74) Mandataire: Peuscet, Jacques

(56) Documents cités:
- EP-A- 0 105 774
- EP-A- 0 277 432
- EP-A- 0 490 142
- FR-A- 2 655 368
- GB-A- 2 172 928
- GB-A- 2 251 503

## Description

La présente invention a pour objet un dispositif antivol de direction pour véhicule automobile.

Un dispositif antivol de direction pour véhicule automobile comporte, généralement, un stator dans lequel est monté tournant un rotor, lequel rotor est muni d'un logement dans lequel une clé peut être introduite ; la clé présente une série d'empreintes adaptées à coopérer avec des moyens de verrouillage et de déverrouillage du rotor par rapport au stator, la rotation du rotor commandée par la clé permettant non seulement le déblocage mécanique de la direction du véhicule mais également l'entraînement d'un commutateur électrique pour réaliser certaines fonctions électriques, comme par exemple l'alimentation électrique du démarreur du véhicule.

Si un tel dispositif permet d'empêcher, dans une certaine mesure, le vol du véhicule, l'expérience montre qu'il n'est pas suffisant et on a, jusqu'ici, cherché à le compléter par des systèmes mécaniques et/ou des systèmes électroniques.

Les systèmes mécaniques sont d'une utilisation pas toujours très commode, et sont souvent encombrants ; les systèmes électroniques sont en général compliqués mais, surtout, ils présentent l'inconvénient d'être en veille permanente : dès lors, des conducteurs électriques sont constamment sous tension, et ceci, d'une part, n'est pas compatible avec les conditions nécessaires de sécurité et, d'autre part, une certaine énergie électrique est consommée, laquelle est limitée sur un véhicule automobile.

La présente invention a pour but un dispositif antivol de direction pour véhicule automobile dont la fonction classique d'antivol a été complétée en palliant les inconvénients ci-dessus.

Ainsi, selon l'invention, un dispositif antivol de direction pour véhicule automobile ayant un stator dans lequel est monté tournant un rotor muni d'un logement dans lequel une clé peut être introduite, est caractérisé par le fait que, le véhicule étant équipé de moyens électroniques de reconnaissance de la clé et/ou du conducteur du véhicule, le dispositif antivol comporte des moyens de mise sous tension d'au moins une partie desdits moyens électroniques de reconnaissance lorsque la clé est présente dans le rotor.

Ainsi, grâce à cette disposition, l'introduction de la clé dans l'antivol de direction va permettre le réveil des moyens électroniques de reconnaissance qui, jusque là, n'étaient pas sous tension, et autoriser ou non l'usage du véhicule.

Avantageusement, lesdits moyens de mise sous tension comprennent deux lames métalliques élastiques portées par un boîtier logé dans une échancrure transversale du stator ; les deux lames sont mises en contact ou éloignées l'une de l'autre par l'extrémité d'un levier monté dans le stator ; le déplacement du levier est commandé par la clé, le levier étant sollicité par l'une des lames dans la position pour laquelle les lames sont éloignées l'une de l'autre lorsque la clé n'est pas présente dans le rotor, alors que le levier est dans la position pour laquelle les lames sont en contact l'une de l'autre lorsque la clé est présente dans le rotor.

Selon une forme de réalisation, le levier est articulé autour d'un axe sur le stator et présente un talon situé sur le levier du même côté, par rapport à son axe, qu'une extrémité du levier coopérant avec l'une des deux lames, un sabot étant monté radialement à coulissement dans le rotor et adapté à coopérer en butée d'un côté avec ledit talon du levier et de l'autre côté avec une tige plate que présente la clé, ledit sabot s'étendant partiellement dans le logement du rotor dans lequel la tige de la clé peut être introduite.

On a déjà proposé, selon FR-A1-2 640 559, d'utiliser le dispositif d'antivol de direction d'un véhicule automobile pour échanger des données, c'est-à-dire lire ou enregistrer des données concernant le véhicule, la clé associée à l'antivol permettant d'échanger lesdites données avec le dispositif d'antivol ; mais cette disposition n'est pas prévue pour compléter la fonction habituelle d'antivol du dispositif d'antivol.

On a également déjà proposé un dispositif de contact(s) entre une clé mécanique et électronique et une serrure mécanique et électronique destinée à être commandée par la clé : c'est le cas du dispositif décrit dans FR-A-2 655 368 ; ce dispositif comprend des moyens de contact(s) électrique(s) dans la serrure et sur la clé pour permettre la transmission d'informations provenant de la clé propres à commander un déverrouillage électrique si la bonne clé a été introduite. L'anneau de clé en forme de plaquette présenté par la clé porte un code que des moyens électroniques de reconnaissance sont adaptés à lire ; avantageusement, les moyens électroniques de reconnaissance et le circuit électronique sont reliables électriquement par un circuit équipé de moyens de contact ; de préférence, les moyens de contact sont portés par la tige de la clé et par une cassette rapportée sur le stator en bout de celui-ci ; les moyens de contact portés par la tige sont constitués d'un plot cylindrique relié au circuit électronique par un conducteur noyé dans l'insert, les extrémités du plot étant dans les plans parallèles limitant la tige ; la cassette est constituée d'un faux-rotor et d'un faux-stator en matière isolante, ayant chacun le même axe que, respectivement, le rotor et le stator, le faux-rotor étant monté à rotation dans un alésage du faux-stator et rendu solidaire en rotation du rotor, le faux-rotor présentant un logement axial similaire au logement du rotor et dans lequel la tige de clé peut être introduite.

L'invention prévoit l'utilisation et l'adaptation de telles dispositions au dispositif antivol de direction pour véhicule automobile ; dans l'application au dispositif antivol de direction pour véhicule automobile, avantageusement, les moyens de contact, portés par la cassette, comprennent, d'une part, une lame métallique élastique disposée dans une échancrure du faux-stator qui communique avec l'alésage par une ouverture radiale que traverse une extrémité de la lame, et, d'autre part, un conducteur en matériau métallique élastique en forme de U entourant une entretoise portée par le faux-rotor, les ailes du U ayant une portion courbe s'étendant jusque dans le logement du faux-rotor au travers d'ouvertures de l'entretoise, ladite lame et ledit conducteur étant au contact lorsque le faux-rotor et le rotor sont au repos, la clé n'y étant pas présente.

Dès lors, le réveil des moyens électroniques de reconnaissance et le dialogue avec le circuit électronique de la clé va permettre aux moyens électroniques de reconnaissance de piloter un boîtier de contrôle électronique autorisant ou non certaines fonctions, comme par exemple le démarrage du véhicule.

La présente invention a également pour objet une clé pour un dispositif antivol tel que ci-dessus ; ladite clé comporte un insert en matière isolante dans lequel est noyé un plot conducteur et un circuit électronique relié électriquement au plot conducteur, les extrémités dudit plot étant dans des plans parallèles limitant une tige portée par la clé.

Pour mieux faire comprendre l'objet de l'invention, on va en décrire, maintenant, à titre d'exemple purement illustratif et non limitatif, un mode de réalisation représenté sur les dessins annexés.

Sur ces dessins :
- la figure 1 représente une vue éclatée, en perspective, d'un dispositif antivol selon l'invention ;
- la figure 2 est une vue, partiellement en coupe, du dispositif monté de la figure 1, la clé 12 y étant présente ;
- la figure 3 est une vue en coupe transversale, à échelle différente, de la cassette 14, la coupe étant faite au droit du plot 44, et la clé n'étant pas présente mais seulement évoquée par des traits mixtes ;
- la figure 4 est une coupe selon IV-IV de la figure 3 ;
- la figure 5 est une coupe selon V-V de la figure 2, à échelle différente ;
- la figure 6 montre schématiquement les liaisons électriques entre le dispositif antivol 65 et des boîtiers électroniques du véhicule automobile équipé de l'antivol.

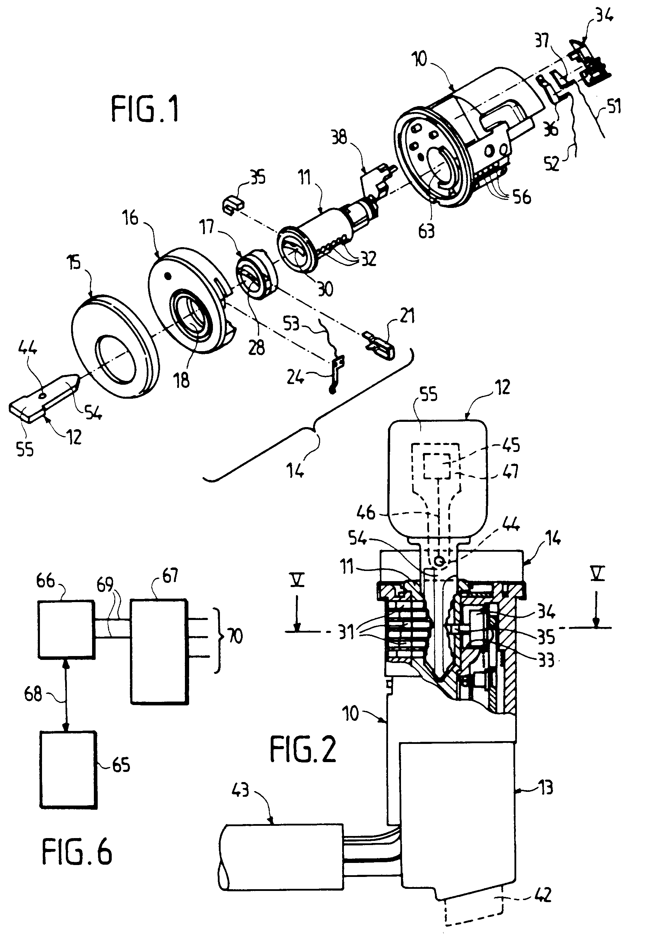

En se reportant aux figures, notamment aux figures 1 et 2, l'antivol comprend, de manière classique, un stator 10 et un rotor 11 monté tournant dans un alésage 63 du stator 10 ; le rotor 11 est muni d'un logement 30 dans lequel une clé 12 peut être introduite ; le logement 30 a une section transversale sensiblement rectangulaire et la clé comporte une tige plate 54 de forme correspondant à celle du logement 30, cette tige 54 étant solidaire d'un anneau de clé 55 en forme de plaquette. La tige 54 de la clé 12 présente une série d'empreintes disposées de façon particulière et adaptées à coopérer avec des goupilles 31 pour le déverrouillage du rotor 11 par rapport au stator 10, les goupilles 31 étant placées dans des logements dont sont munis le rotor 11 et le stator 10, respectivement 32 et 56. La rotation du rotor 11 commandée par la clé 12 permet, par l'intermédiaire d'un mécanisme à came contenu dans le stator 10, d'une part, de déplacer un pêne 42, porté par un boîtier 13 solidarisé au stator 10, pour le déblocage mécanique de la direction du véhicule automobile équipé dudit antivol, et, d'autre part, d'entraîner un commutateur électrique pour réaliser certaines liaisons électriques, par l'intermédiaire d'un câble 43, comme par exemple pour l'alimentation du démarreur du véhicule ; le fonctionnement d'un tel antivol est bien connu, et donc il ne sera pas décrit plus en détail.

La présente invention prévoit de compléter cette fonction antivol classique en lui associant, de manière simple, une fonction supplémentaire de reconnaissance de clé. Des moyens électroniques de détection, non représentés, sont prévus pour lire un code stocké dans la clé 12 : ainsi, après ouverture des portes du véhicule par les moyens habituels qui peuvent être mécaniques, c'est-à-dire la tige 54 de la clé 12, ou électroniques, c'est-à-dire des systèmes de télécommande intégrés dans l'anneau 55 de la clé 12, par exemple à infra-rouge, par radio-fréquence ou hyper-fréquence, l'introduction de la clé 12 dans l'antivol de direction entraîne la détection de la présence de la clé 12, le réveil des moyens électroniques de détection et le contrôle d'un code contenu dans la clé 12.

Si le contrôle du code par les moyens électroniques conduit à une habilitation de la clé 12, lesdits moyens électroniques autorisent alors, par exemple, la commande du moteur du véhicule, notamment son démarrage ; si le contrôle du code conduit à une non-habilitation de la clé 12, les moyens électroniques n'autorisent pas le démarrage du moteur. Bien entendu, les moyens électroniques peuvent avoir d'autres actions que celle d'autoriser ou non la commande du moteur (démarrage électrique, alimentation en carburant, allumage), par exemple une action sur un système d'alarme sonore.

Plus précisément, pour agir sur lesdits moyens électroniques, la clé 12 comporte des moyens de contact électrique 44 constitués par un plot métallique conducteur noyé dans un insert 47 en matière isolante prévu dans l'anneau 55 et se prolongeant dans la tige 54 ; le plot 44 est par exemple en forme de cylindre dont les deux extrémités sont dans les plans parallèles limitant la tige 54. Un circuit électronique 45 est noyé dans l'insert 47 au droit de l'anneau 55 de la clé 12 et relié au plot 44 par un conducteur 46. Le circuit électronique 45 est très simple : il ne contient que peu de composants, dont une mémoire contenant un code.

Selon l'invention, le rotor 11 et le stator 10 de l'antivol sont prolongés par des pièces rapportées que nous désignerons, pour faciliter la compréhension, par, respectivement, faux-rotor 17 et faux-stator 16 ; le faux-rotor 17 et le faux-stator 16 sont réalisés en matière isolante ; ils ont chacun respectivement le même axe que le rotor 11 et le stator 10 ; le faux-rotor 17 est monté à rotation dans un alésage 18 du faux-stator 16 et est rendu solidaire en rotation du rotor 11 ; le faux-rotor 17 présente un logement 28 similaire au logement 30 du rotor et dans lequel la clé 12 peut être introduite. Un cache 15, par exemple métallique, vient coiffer le faux-stator 16 ; le cache 15, le faux-stator 16 équipé du faux-rotor 17 constituent une cassette 14 formant un sous-ensemble rapporté sur le stator 10 de l' antivol de direction, en bout de celui-ci.

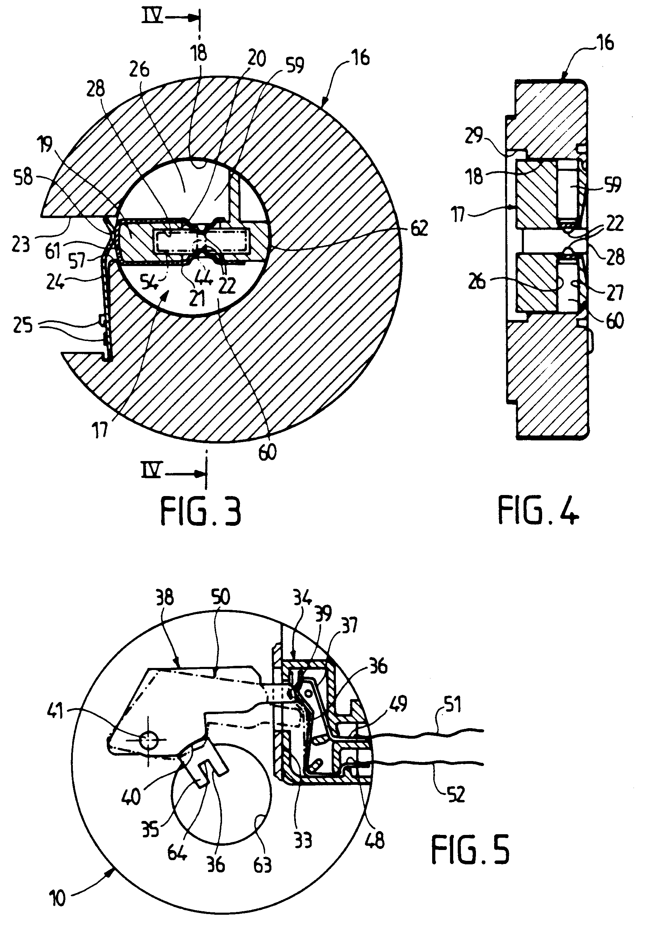

Des moyens de contact électrique 21-24 (figures 3 et 4 ) sont prévus dans la cassette 14 ; ces moyens comprennent une lame élastique 24 métallique disposée, dans une échancrure 23 du faux-stator 16, tangentiellement à l'alésage 18 ; l'échancrure 23 communique avec l'alésage 18 par une ouverture 57 radiale, perpendiculairement à la lame 24 ; la lame élastique 24 est maintenue à une extrémité par des rivets 25 sur le faux-stator 16, son autre extrémité ayant une courbure 58 dont la convexité est tournée vers l'alésage 18 et qui pénètre dans l'alésage 18 à travers l'ouverture 57 quand la lame 24 est au repos. Le faux-rotor 17 est creusé de deux logements 59 et 60, débouchant à l'extérieur du faux-rotor 17, définis entre deux faces 26 et 27 transversales reliées l'une à l'autre par une entretoise axiale 19 traversée par le logement axial 28 de clé ; l'entretoise 19 est également traversée transversalement par un passage 20 perpendiculaire à la direction longitudinale du logement 28 qu'il traverse de part en part en débouchant dans les logements 59 et 60. A l'une de ses extrémités, l'extrémité 62, l'entretoise 19 est circulaire, selon la surface cylindrique du faux-rotor 17 tournant dans l'alésage 18 du faux-stator 16.

Un conducteur 21 en matériau métallique élastique, de largeur égale à la distance qui sépare axialement les deux faces 26 et 27, est en forme de U et entoure l'entretoise 19 ; l'âme 61 du U épouse la forme circulaire de l'extrémité de l'entretoise opposée à l'extrémité 62 et décalée radialement par rapport à l'alésage 18 d'une quantité égale, au jeu près, à l'épaisseur du conducteur 21, en sorte que l'âme 61 est extérieurement au même niveau que la surface externe cylindrique du faux-rotor 17. L'extrémité de chacune des ailes du U a une portion courbe 22 dont la convexité est tournée vers l'intérieur du U, ladite portion 22 prenant place dans l'ouverture 20 qu'elle traverse pour dépasser, en position de repos, à l'intérieur du logement de clé 28 lorsque le conducteur 21 est monté sur l'entretoise 19 ; il faut entendre ici par position de repos la position qu'occupent les portions 22 lorsque la clé 12 n'occupe pas le logement de clé 28. Sur la figure 3, le faux-rotor 17 est représenté dans la position qu'il occupe, par rapport au faux-stator 16, pour laquelle l'âme 61 est au droit de l'ouverture radiale 57 du faux-stator et est donc en contact électrique avec la courbure 58 de la lame 24, ce qui ferme un circuit électrique de reconnaissance de clé, non représenté, seule une portion de fil 53 étant montrée figure 1, liée à la lame 24. Lorsque la clé 12 est mise en place dans l'antivol de direction, dans les logements 30 et 28, le plot métallique conducteur 44 de la tige 54 de la clé 12 est en contact avec les portions 22 du conducteur 21, position représentée en traits mixtes à la figure 3, et le circuit électronique 45 porté par la clé 12 est en relation électrique avec ledit circuit électrique de reconnaissance.

Dans un but, notamment, d'économie d'énergie, ledit circuit électrique de reconnaissance de clé n'est pas sous tension lorsque le véhicule est à l'arrêt, c'est-à-dire lorsque l'antivol de direction est en position de repos, la clé 12 n'étant pas présente dans l'antivol.

L'invention prévoit un dispositif permettant de mettre le circuit électrique de reconnaissance sous tension seulement lorsque la clé 12 est présente dans l'antivol.

Le dispositif de mise sous tension est constitué, comme cela est visible en particulier sur la figure 5, de moyens interrupteur comprenant deux lames 36, 37 reliées chacune, respectivement, à un conducteur 52, 51 soudé à l'une de leur extrémité 48, 49 ; les lames 36, 37, dont la largeur s'étend parallèlement à l'axe du stator 10, sont montées dans un boîtier 34, lui-même logé dans une échancrure 33 transversale du stator 10 ; les extrémités des lames 36 et 37, opposées aux extrémités 48, 49 sont éloignées l'une de l'autre au repos, coupant le circuit électrique 51-52 ; leur mise en contact électrique peut être obtenue par la coopération, avec la lame 36, de l'extrémité 39 d'un levier 38 articulé autour d'un axe 41 sur le stator 10, le levier 38 ayant une forme plate et s'étendant transversalement dans un plan perpendiculaire à l'axe du stator 10. Sur la figure 5, le levier 38 et les lames 36, 37 sont représentés en traits pleins dans la position où le circuit 51-52 est fermé, et en traits mixtes 50 dans la position où ce circuit est ouvert. Le passage d'une position à l'autre est obtenu par un effort radial appliqué sur un talon 40 que présente le levier 38, ledit talon étant face à l'alésage 63 du stator 10 dans lequel est monté le rotor 11 et du même côté que l'extrémité 39 du levier 38 par rapport à l'axe 41 ; pour l'application de cet effort radial, le talon 40 est amené à coopérer avec un sabot 35 monté à coulissement radial dans le rotor 11, et traversant la paroi de l'alésage 63 du stator 10 ; le sabot 35 est muni d'une échancrure 36 dont la largeur est égale à l'épaisseur de la tige 54 de la clé 12, l'échancrure 36 s'étendant parallèlement à l'axe du stator 10 ; le fond 64 de l'échancrure est adapté à coopérer avec le bord de la tige 54 de la clé 12 qui se comporte, à son égard, à la manière d'une came : ainsi, lorsque la clé 12 est en place dans l'antivol, la clé 12 met le sabot 35 dans la position où, par l'intermédiaire du levier 38, les lames 36 et 37 sont en contact et le circuit 51-52 est fermé, tandis que lorsque la clé 12 n'est pas présente dans l'antivol, le levier 38 est rappelé élastiquement par la lame 36 dans la position où son talon 40 est plus proche de l'alésage 63.

Le fonctionnement de l'antivol selon l'invention est le suivant.

Avant l'introduction de la clé 12, le faux-rotor 17 est en position de repos dans le faux-stator 16, laquelle position de repos correspond à celle qui est montrée figure 3 où la lame 24 et le conducteur 21 sont au contact, tandis que, dans le rotor 11, le sabot 35 et le talon 40 sont vers l'axe du rotor 11, les lames 36 et 37 n'étant pas en contact.

Lors de l'introduction de la clé 12, d'une part, la mise en concordance du plot 44 et des portions courbes 22 du conducteur 21, relie le circuit électronique 45 à la portion de fil 53 du circuit électrique de reconnaissance du code porté par ce circuit électronique 45, via la lame 24, et, d'autre part, la tige 54 de la clé 12 repousse le sabot 35, donc le levier 38 et met en contact les lames 36, 37, mettant ainsi sous tension le circuit électrique de reconnaissance, qui lit l'information contenue dans la clé 12.

Si la clé 12 est la bonne, l'information autorise, par exemple, le démarrage du véhicule en tournant la clé 12, de manière classique.

Si la clé 12 n'est pas la bonne sur le plan électronique, même si elle est bonne sur le plan mécanique, le démarrage n'est pas possible.

On voit que, grâce à l'invention, on dispose d'une sécurité complémentaire par rapport à un antivol de direction classique.

L'invention prévoit également que le code mis en mémoire dans les moyens électroniques de reconnaissance et celui contenu dans la clé 12 puissent être changés par l'utilisateur : cette disposition présente l'avantage qu'en cas de perte d'une clé, il est possible de changer les codes, celui des moyens électroniques de reconnaissance et celui des clés encore en possession de l'usager et rendre alors inopérante la clé perdue.

Indépendamment de la fonction sécurité qui vient d'être décrite, le dispositif selon l'invention a également l'avantage de permettre une meilleure gestion du véhicule. Ainsi, lorsque divers équipements sont adaptables au conducteur du véhicule, comme par exemple la position du volant, du siège ou autre, et que cette adaptation est réalisée électriquement, une partie du codage contenu dans le circuit électronique 45 pourrait identifier le conducteur ; dès lors, la reconnaissance de la clé est accompagnée d'une reconnaissance du conducteur, et les moyens électroniques de reconnaissance communiquent cette information à une électronique de gestion qui commande alors en conséquence, automatiquement, le positionnement des équipements.

Bien entendu, en variante, les données morphologiques du conducteur pourraient être stockées directement dans le circuit électronique 45 de la clé 12.

On a représenté schématiquement sur la figure 6 la liaison électrique 68 entre le dispositif antivol 65 et les moyens électroniques de reconnaissance 66 : la liaison 68 comprend, d'une part, le circuit de mise sous tension dont font partie les conducteurs 51 et 52, et, d'autre part, le circuit permettant un dialogue entre le circuit électronique 45 et les moyens de reconnaissance 66. Les moyens électroniques de reconnaissance 66 sont en relation, via des conducteurs 69, avec le boîtier de contrôle et de commande électronique de fonctions du véhicule, comme le démarrage, l'alimentation en carburant, le confort.

## Revendications

1. Dispositif antivol de direction pour véhicule automobile ayant un stator (10) dans lequel est monté tournant un rotor (11) muni d'un logement (30) dans lequel une clé (12) peut être introduite, le véhicule étant équipé de moyens électroniques de reconnaissance (66) de la clé (12) et/ou du conducteur du véhicule, le dispositif antivol comportant des moyens de mise sous tension (36, 37) d'au moins une partie desdits moyens électroniques de reconnaissance (66) lorsque la clé (12) est présente dans le rotor (11), les moyens électroniques de reconnaissance (66) étant adaptés à lire un code porté par l'anneau de clé (55) en forme de plaquette que présente la clé (12) et qui se prolonge selon une tige plate (54), le code porté par la clé (12) étant contenu dans un circuit électronique (45) noyé dans un insert (47) en matière isolante, prévu dans l'anneau (55), les moyens électroniques de reconnaissance (66) et le circuit électronique (45) étant reliables électriquement par un circuit (46, 68) équipé de moyens de contact (44, 21, 24) portés par la tige (54) de la clé (12) et par une cassette (14) rapportée sur le stator (10) en bout de celui-ci, caractérisé par le fait que la cassette (14) est constituée d'un faux-rotor (17) et d'un faux-stator (16) en matière isolante, ayant chacun le même axe que, respectivement, le rotor (11) et le stator (10), le faux-rotor (17) étant monté à rotation dans un alésage (18) du faux-stator (16) et rendu solidaire en rotation du rotor (11), le faux-rotor (17) présentant un logement axial (28) similaire au logement (30) du rotor (11) et dans lequel la tige de clé (54) peut être introduite, les moyens de contact (21, 24), portés par la cassette (14), comprenant, d'une part, une lame métallique élastique (24) disposée dans une échancrure (23) du faux-stator (16) qui communique avec l'alésage (18) par une ouverture (57) radiale que traverse une extrémité (58) de la lame (24), et, d'autre part, un conducteur (21) en matériau métallique élastique entourant une entretoise (19) portée par le faux-rotor (17), deux ailes du conducteur (21) ayant une portion courbe (22) s'étendant jusque dans le logement (28) du faux-rotor (17) au travers d'ouvertures (20) de l'entretoise (19), ladite lame (24) et ledit conducteur (21) étant au contact lorsque le faux-rotor (17) et le rotor (11) sont au repos, la clé (12) n'y étant pas présente.

2. Dispositif antivol selon la revendication 1, caractérisé par le fait que lesdits moyens de mise sous tension (36, 37) comprennent deux lames (36) et (37) métalliques élastiques portées par un boîtier (34) logé dans une échancrure (33) transversale du stator (10).

3. Dispositif antivol selon la revendication 2, caractérisé par le fait que les deux lames (36) et (37) sont mises en contact ou éloignées l'une de l'autre par l'extrémité (39) d'un levier (38) monté dans le stator (10).

4. Dispositif antivol selon la revendication 3, caractérisé par le fait que le déplacement du levier (38) est commandé par la clé (12), le levier (38) étant sollicité par l'une des lames (36) dans la position pour laquelle les lames (36) et (37) sont éloignées l'une de l'autre lorsque la clé (12) n'est pas présente dans le rotor (11), alors que le levier (38) est dans la position pour laquelle les lames (36) et (37) sont en contact l'une de l'autre lorsque la clé (12) est présente dans le rotor (11).

5. Dispositif antivol selon la revendication 4, caractérisé par le fait que le levier (38) est articulé autour d'un axe (41) sur le stator (10) et présente un talon (40) situé sur le levier (38) du même côté, par rapport à l'axe (41), qu'une extrémité (39) du levier (38) coopérant avec l'une (36) des deux lames (36) et (37), un sabot (35) étant monté radialement à coulissement dans le rotor (11) et adapté à coopérer en butée d'un côté avec ledit talon (40) du levier (38) et de l'autre côté avec une tige plate (54) que présente la clé (12), ledit sabot (35) s'étendant partiellement dans le logement (30) du rotor (11) dans lequel la tige (54) de la clé (12) peut être introduite.

6. Dispositif antivol selon l'une des revendications 1 à 5, caractérisé par le fait que les moyens de contact (44) portés par la tige (54) sont constitués d'un plot (44) cylindrique relié au circuit électronique (45) par un conducteur (46) noyé dans l'insert (47), les extrémités du plot (44) étant dans les plans parallèles limitant la tige (54).

7. Clé pour dispositif antivol de direction pour véhicule automobile, selon l'une des revendications 1 à 6 précédentes, caractérisée par le fait qu'elle comporte un insert (47) en matière isolante dans lequel est noyé un plot (44) conducteur et un circuit électronique (45) relié électriquement au plot conducteur (44), les extrémités dudit plot (44) étant dans des plans parallèles limitant une tige (54) portée par la clé (12).

## Claims

1. Steering anti-theft device for a motor vehicle having a barrel (10) in which there is mounted so that it can rotate a plug (11) equipped with a housing (30) into which a key (12) may be inserted, the vehicle being equipped with electronic means (66) for recognizing the key (12) and/or the driver of the vehicle, the anti-theft device including means (36, 37) for powering at least some of the said electronic recognition means (66) when the key (12) is present in the plug (11), the electronic recognition means (66) being capable of reading a code borne by the plate-shaped bow (55) that the key (12) exhibits and which is extended into a flat stem (54), the code borne by the key (12) being contained in an electronic circuit (45) embedded in an insert (47) made of insulating material provided in the bow (55), it being possible for the electronic recognition means (66) and the electronic circuit (45) to be linked electrically by a circuit (46, 68) equipped with contact means (44, 21, 24) borne by the stem (54) of the key (12) and by a cassette (14) attached to the barrel (10) at the end thereof, characterized in that the cassette (14) consists of a dummy plug (17) and of a dummy barrel (16) made of insulating material, each having the same axis as the plug (11) and the barrel (10) respectively, the dummy plug (17) being mounted so that it can rotate in a bore (18) in the dummy barrel (16) and rendered rotationally interdependent with the plug (11), the dummy plug (17) exhibiting an axial housing (28) similar to the housing (30) of the plug (11) and into which the key stem (54) may be inserted, the contact means (21, 24) borne by the cassette (14) comprising, on the one hand, an elastic metal strip (24) located in a slot (23) in the dummy barrel (16) which communicates with the bore (18) via a radial opening (57) which passes through one end (58) of the strip (24) and, on the other hand, a conductor (21) made of an elastic metallic material surrounding a spacer piece (19) borne by the dummy plug (17), two legs of the conductor (21) having a curved portion (22) extending into the housing (28) of the dummy plug (17) through openings (20) in the spacer piece (19), the said strip (24) and the said conductor (21) being in contact when the dummy plug (17) and the plug (11) are at rest, the key (12) not being present therein.

2. Anti-theft device according to Claim 1, characterized in that the said powering means (36, 37) comprise two elastic metal strips (36) and (37) borne by a housing (34) housed in a transverse slot (33) in the barrel (10).

3. Anti-theft device according to Claim 2, characterized in that the two strips (36) and (37) are brought into contact or moved apart by the end (39) of a lever (38) mounted in the barrel (10).

4. Anti-theft device according to Claim 3, characterized in that the movement of the lever (38) is controlled by the key (12), the lever (38) being urged by one of the strips (36) into the position for which the strips (36) and (37) are distant from one another when the key (12) is not present in the plug (11), whereas the lever (38) is in the position for which the strips (36) and (37) are in contact with one another when the key (12) is present in the plug (11).

5. Anti-theft device according to Claim 4, characterized in that the lever (38) is articulated about a pivot pin (41) on the barrel (10) and has a heel (40) situated on the lever (38) on the same side, with respect to the pivot pin (41), as an end (39) of the lever (38) interacting with one (36) of the two strips (36) and (37), a shoe (35) being mounted so that it can slide radially in the plug (11) and capable of interacting in abutment on the one hand with the said heel (40) of the lever (38) and on the other hand with a flat stem (54) that the key (12) exhibits, the said shoe (35) extending partially into the housing (30) of the plug (11) into which the stem (54) of the key (12) may be inserted.

6. Anti-theft device according to one of Claims 1 to 5, characterized in that the contact means (44) borne by the stem (54) consist of a cylindrical pad (44) linked to the electronic circuit (45) by a conductor (46) embedded in the insert (47), the ends of the pad (44) being in the parallel planes bounding the stem (54).

7. Key for a steering anti-theft device for a motor vehicle, according to one of the preceding Claims 1 to 6, characterized in that it includes an insert (47) made of insulating material in which there is embedded a conductive pad (44) and an electronic circuit (45) linked electrically to the conductive pad (44), the ends of the said pad (44) being in parallel planes bounding a stem (54) borne by the key (12).

## Patentansprüche

1. Lenkrad-Diebstahlsicherungsvorrichtung für ein automobiles Fahrzeug mit einem Stator (10), in dem ein Rotor (11) drehbar gelagert ist, der einen Schlitz (30) aufweist, in den ein Schlüssel (12) eingeführt werden kann, wobei das Fahrzeug mit elektronischen Erkennungseinrichtungen (66) des Schlüssels (12) und/oder des Fahrers des Fahrzeugs ausgerüstet ist, wobei die Diebstahlsicherungsvorrichtung Einrichtungen (36, 37) zum Anlegen von Spannung an mindestens einen Teil der elektronischen Erkennungseinrichtungen (66) aufweist, wenn der Schlüssel (12) im Rotor (11) vorhanden ist, wobei die elektronischen Erkennungseinrichtungen (66) zum Lesen eines Codes im Schlüsselgriff (55) geeignet sind, der in der Form einer Platte des Schlüssels (12) ausgebildet ist, die sich in einer flachen Klinge (54) fortsetzt, wobei der im Schlüssel (12) vorhandene Code in einer elektronischen Schaltung (45) gespeichert ist, die in einem im Schlüsselgriff (55) vorgesehenen Einsatz (47) aus isolierendem Material eigebettet ist, wobei die elektronischen Erkennungseinrichtungen (66) und die elektronische Schaltung (45) über eine Schaltung (46, 68), die in der Klinge (54) des Schlüssels (12) bzw. einem auf dem Stator (10) auf dessen Ende angebrachten Vorsatz (14) untergebrachte Kontakteinrichtungen (44, 21, 24) aufweist, elektrisch verbunden werden können, dadurch gekennzeichnet, daß der Vorsatz (14) aus einem Scheinrotor (17) und einem Scheinstator (16) aus isolierendem Material besteht, die mit dem Rotor (11) bzw. mit dem Stator (10) koaxial angeordnet sind, wobei der Scheinrotor (17) drehbar in einer Bohrung (18) des Scheinstators (16) gelagert ist und mit dem Rotor (11) zusammen gedreht werden kann, wobei der Scheinrotor (17) eine axiale Spalte (28) aufweist, die ähnlich der Spalte (30) des Rotors (11) ist und in die die Schlüsselklinge (54) eingeführt werden kann, wobei die im Vorsatz (14) untergebrachten Kontakteinrichtungen (21, 24) einerseits eine in einer halbmondförmigen Aussparung (23) des Scheinstators (16) angeordnete elastische Metallfeder (24) aufweisen, wobei die Aussparung (23) mit der Bohrung (18) über eine radiale Öffnung (57) verbunden ist, in die ein Ende (58) der Feder (24) hineinragt, und andererseits einen Leiter (21) aus elastischem Metallmaterial, der einen auf dem Scheinrotor (17) angebrachten Steg (19) umschließt, wobei zwei Fortsätze des Leiters (21) einen gebogenen Teil (22) aufweisen, der sich in den Schlitz (28) des Scheinrotors (17) hinein durch die Öffnungen (20) des Stegs (19) fortsetzt, wobei die Feder (24) und der Leiter (21) miteinander in Kontakt stehen, wenn sich der Scheinrotor (17) und der Rotor (11) in Ruhestellung befinden, wenn der Schlüssel (12) nicht vorhanden ist.

2. Diebstahlsicherungsvorrichtung nach Anspruch 1, dadurch gekennzeichnet, daß die Einrichtungen zum Anlegen von Spannung (36, 37) zwei elastische Metallfedern (36) und (37) aufweisen, die von einem Gehäuse (34) getragen werden, das in einer quer zum Stator (10) verlaufenden Aussparung (33) angeordnet ist.

3. Diebstahlsicherungsvorrichtung nach Anspruch 2, dadurch gekennzeichnet, daß die zwei Federn (36) und (37) durch das Ende (39) eines im Stator (10) angebrachten Hebels (38) miteinander in Kontakt gebracht oder voneinander entfernt werden.

4. Diebstahlsicherungsvorrichtung nach Anspruch 3, dadurch gekennzeichnet, daß die Bewegung des Hebels (38) durch den Schlüssel (12) hervorgerufen wird, wobei der Hebel (38) durch eine der Federn (36) in die Position gedrückt wird, in der die Federn (36) und (37) voneinander entfernt sind, wenn der Schlüssel (12) nicht im Rotor (11) gegenwärtig ist, während der Hebel (38) sich in der Position befindet, in der die Federn (36) und (37) miteinander in Kontakt stehen, wenn der Schlüssel (12) im Rotor (11) gegenwärtig ist.

5. Diebstahlsicherungsvorrichtung nach Anspruch 4, dadurch gekennzeichnet, daß der Hebel (38) um eine Achse (41) auf dem Stator (10) drehbar gelagert ist und eine auf dem Hebel (38) ausgebildete Nase (40), die mit Bezug auf die Achse (41) auf der gleichen Seite angeordnet ist wie ein Ende (39) des Hebels (38), das mit einer (36) der beiden Federn (36) und (37) zusammenwirkt, und einen Schuh (35) der radial verschiebbar im Rotor (11) angebracht ist und der auf der einen Seite gegen die Nase (40) des Hebels (38) und auf der anderen Seite gegen eine flache Klinge (54), die der Schlüssel (12) bildet, drückt, aufweist, wobei der Schuh (35) sich teilweise in die Spalte (30) des Rotors (11) hinein erstreckt, in die die Klinge (54) des Schlüssels (12) eingeführt werden kann.

6. Diebstahlsicherungsvorrichtung nach einem der Ansprüche 1 bis 5, dadurch gekennzeichnet, daß die von der Klinge (54) getragenen Kontakteinrichtungen (44) aus einem zylindrischen Kontakt (44) bestehen, die über einen in den Einsatz (47) eingelassenen Leiter (46) mit der elektronischen Schaltung (45) verbunden sind, wobei die Enden des Kontakts (44) zu den Begrenzungsflächen der Klinge (54) parallel sind.

7. Schlüssel für eine Lenkrad-Diebstahlsicherungsvorrichtung für ein automobiles Fahrzeug nach einem der voranstehenden Ansprüche 1 bis 6, dadurch gekennzeichnet, daß er einen Einsatz (47) aus isolierendem Material aufweist, in den ein leitender Kontakt (44) und eine mit den Enden des Kontakts (44) elektrisch verbundene elektronische Schaltung (45) eingelassen sind, wobei die Enden des Kontakts (44) zu den Begrenzungsflächen der Klinge (54) des Schlüssels (12) parallel sind.
